# EUROPÄISCHE PATENTSCHRIFT

(11) **EP 3 700 850 B1**
(45) Veröffentlichungstag und Bekanntmachung des Hinweises auf die Patenterteilung: **01.12.2021**
(21) Anmeldenummer: 18785667.9
(22) Anmeldetag: 18.10.2018
(51) Int. Cl.: B66B 5/00

(54) **SICHERHEITSSYSTEM FÜR GEBÄUDEGEBUNDENE PERSONENBEFÖRDERUNGSANLAGE**
SECURITY SYSTEM FOR BUILDING-CONNECTED PASSENGER TRANSPORT SYSTEM
SYSTÈME DE SÉCURITÉ POUR INSTALLATION DE TRANSPORT DE PERSONNES RELIÉE AU BÂTIMENT

(30) Priorität: 27.10.2017 EP 17198934
(43) Veröffentlichungstag der Anmeldung: 02.09.2020
(73) Patentinhaber: Inventio AG, 6052 Hergiswil (CH)
(72) Erfinder: SONNENMOSER, Astrid, 6280 Hochdorf (CH); HOSEMANN, Axel, 5644 Auw (CH)
(86) Internationale Anmeldenummer: PCT/EP2018/078520
(87) Internationale Veröffentlichungsnummer: WO 2019/081332

(56) Entgegenhaltungen:
- EP-A1- 2 916 219
- WO-A1-2016/180484
- US-B1- 6 170 614

## Beschreibung

Die vorliegende Erfindung betrifft ein Sicherheitssystem für eine gebäudegebundene Personentransportanlage sowie ein Verfahren zum Aktualisieren von Software eines derartigen Sicherheitssystems.

Gebäudegebundene Personenbeförderungsanlagen, wie etwa Aufzüge, Fahrtreppen und Fahrsteige, dienen zum Befördern von Personen innerhalb von Gebäuden. Aufzuganlagen dienen beispielsweise dazu, Personen innerhalb eines Gebäudes zwischen verschiedenen Stockwerken zu befördern. Hierzu kann im Regelfall eine Aufzugskabine innerhalb eines meist vertikalen Aufzugschachts verlagert werden. Im Falle von Fahrtreppen oder Fahrsteigen können Personen auf Tritteinheiten stehend entlang von geneigten oder horizontalen Fahrwegen befördert werden.

Um die Sicherheit von Personen gewährleisten zu können, weisen viele gebäudegebundene Personenbeförderungsanlagen eine Sicherheitseinheit auf, die von sicherheitsrelevanten Sensoren Signale empfängt, diese auswertet und, falls ein nichtsicherer Zustand ermittelt wird, eine Sicherheitsmassnahme auslöst. Die Sicherheitsmassnahme kann beispielsweise darin bestehen, die gebäudegebundene Personenbeförderungsanlagen zu stoppen, indem ein entsprechendes Signal an eine Steuerung der gebäudegebundenen Personenbeförderungsanlagen übermittelt wird. Beispielsweise sind an den Türen einer Aufzuganlage in der Regel Schalter angebracht, mit denen überprüft werden kann, ob die Türen geschlossen sind. Sind nicht alle Türen geschlossen, verhindert die Sicherheitseinheit, dass die Aufzugskabine im Schacht bewegt werden kann, beispielsweise um zu verhindern, dass Personen eingeklemmt werden oder in den Schacht fallen.

Da Sicherheitseinheiten in der Regel in grossen Stückzahlen verbaut werden, kann es wünschenswert sein, eine Software der Sicherheitseinheit extern, beispielsweise über Internet, aktualisieren zu können. Andererseits muss ein externes Interface vor unberechtigtem Zugriff geschützt werden. Bei Sicherheitseinheiten sollte aber die Komplexität möglichst klein gehalten werden, um sicherzugehen, dass die Sicherheitsfunktionen jederzeit und korrekt ausgeführt werden. Ausserdem müssen Sicherheitseinheiten von Personentransportanlagen in der Regel zertifiziert werden, was mit steigender Komplexität der Sicherheitseinheiten aufwändiger und damit kostenintensiver wird.

Die WO 2016/180484 A1, EP 2 916 219 A1 und US 6, 170, 614 B1 beschreiben Verfahren zum Aktualisieren von Software in einem Sicherheitsüberwachungssystem einer Aufzuganlage.

Insgesamt kann ein Bedarf für ein Sicherheitssystem mit einer einfach aufgebauten Sicherheitseinheit mit einer gut geschützten Aktualisierungsfunktion bestehen.

Einem solchen Bedarf kann mit dem Gegenstand der unabhängigen Patentansprüche entsprochen werden. Vorteilhafte Ausführungsformen sind in den abhängigen Patentansprüchen sowie der nachfolgenden Beschreibung dargelegt.

Ein Aspekt der Erfindung betrifft ein Sicherheitssystem für eine gebäudegebundene Personentransportanlage. Wie bereits gesagt, kann eine gebäudegebundene Personenbeförderungsanlage eine Aufzuganlage, eine Fahrtreppenanlage oder eine Fahrsteiganlage sein.

Gemäss einer Ausführungsform der Erfindung umfasst das Sicherheitssystem eine Sicherheitseinheit zum Empfangen von sicherheitsrelevanten Signalen von Komponenten der Personentransportanlage und zum Auslösen einer Sicherheitsmassnahme. Die sicherheitsrelevanten Signale können von Sicherheitssensoren der gebäudegebundenen Personentransportanlagen stammen und/oder können beispielsweise über einen Bus zu der Sicherheitseinheit gesendet werden. Sicherheitssensoren können im Allgemeinen alle Arten von Sensoren sein, die sicherheitsrelevante Informationen über Komponenten der gebäudegebundenen Personenbeförderungsanlage detektieren. Beispiele für derartige Sensoren sind Türschliesssensoren, die detektieren, ob eine Aufzugtür ordnungsgemäss geschlossen ist. Die Sicherheitseinheit kann direkt mit einer Steuerung der gebäudegebundenen Personenbeförderungsanlage verbunden sein, die beispielsweise einen Antrieb und/oder weitere Aktoren (wie etwa Türöffner) steuert. Die Sicherheitsmassnahme kann beispielsweise darin bestehen, dass die Sicherheitseinheit Warnsignals an eine Steuerung der Personentransportanlage sendet. Wenn die Sicherheitseinheit ein Warnsignal abgibt, kann die Steuerung beispielsweise verhindern, dass der Antrieb und/oder die Aktoren betrieben werden. Statt ein Warnsignal an die Steuerung zu senden, kann die Sicherheitseinheit auch eine Energieversorgung der Personentransportanlage unterbrechen und so die Personentransportanlage stillsetzen. Darüber hinaus sind weitere Sicherheitsmassnahmen denkbar.

Das Sicherheitssystem umfasst weiter eine Aktualisierungseinheit zum Empfangen von aktualisierter Software über eine externe Schnittstelle und zum Senden der aktualisierten Software an die Sicherheitseinheit über eine interne Schnittstelle. Die externe Schnittstelle kann beispielsweise über ein oder mehrere Datenkommunikationsgeräte, wie etwa einem Router, mit dem Internet verbunden sein. Über diese externe Schnittstelle kann die aktualisierte Software empfangen werden. Die Aktualisierungseinheit kann dabei überprüfen, ob der Bereitsteller bzw. Sender der Software der ist, der er vorgibt zu sein, und/oder kann die aktualisierte Software entschlüsseln.

Die Aktualisierungseinheit und die Sicherheitseinheit können über eine interne Schnittstelle Daten austauschen. Der Begriff "extern" für eine Schnittstelle kann bedeuten, dass über diese Schnittstelle Daten mit einem System ausgetauscht werden können, das nicht Bestandteil der gebäudegebundenen Personenbeförderungsanlage ist. Umgekehrt kann der Begriff "intern" für eine Schnittstelle bedeuten, dass lediglich Daten mit Komponenten der gebäudegebundenen Personenbeförderungsanlage ausgetauscht werden können. Beispielsweise kann die Aktualisierungseinheit die aktualisierte Software direkt in einen Speicher der Sicherheitseinheit schreiben. Auf diese Weise kann die für eine Aktualisierung nötige Software der Sicherheitseinheit auf ein Minimum reduziert werden.

Die Sicherheitseinheit und die Aktualisierungseinheit sind getrennte Einheiten. Die Sicherheitseinheit und die Aktualisierungseinheit weisen eigene Hardware auf, d.h., jede von ihnen kann getrennte Hardware aufweisen, auf der eigene Softwarekomponenten laufen. Damit kann die Hardware und Software für die Sicherheitseinheit möglichst einfach gestaltet werden, was die Personensicherheit erhöhen und die Zertifizierung erleichtern kann. Eine externe Schnittstelle und komplexe Aktualisierungssoftware für die Sicherheitseinheit ist nicht notwendig. Umgekehrt kann die Aktualisierungseinheit auf Datensicherheit hin optimiert werden. Auch komplexere Software, wie etwa zum Entschlüsseln/Verschlüsseln von Daten, kann in der Aktualisierungseinheit vorhanden sein und schnell verarbeitet werden. Die Aktualisierungseinheit kann die interne Schnittstelle zur Sicherheitseinheit schützen. Eine Zertifizierung der Aktualisierungseinheit ist nicht notwendig, so dass eine grössere Komplexität der Aktualisierungseinheit diesbezüglich unkritisch ist.

Die Sicherheitseinheit umfasst einen ersten Prozessor, einen ersten flüchtigen Speicher und einen ersten nicht-flüchtigen Speicher. In dem ersten nicht-flüchtigen Speicher, beispielsweise einem FLASH-Speicher, kann sich die zu aktualisierende Software befinden, die durch die aktualisierte Software ersetzt wird. Die zu aktualisierende Software kann auch als Firmware der Sicherheitseinrichtung aufgefasst werden. Die Sicherheitseinheit kann eine speicherprogrammierbare Steuerung (SPS; englisch: Programmable Logic Controller - PLC) sein. Weiter kann die Sicherheitseinheit Ports (Kommunikationsbausteine) für eine Datenkommunikation über die interne Schnittstelle und zu weiteren Komponenten, wie etwa die Steuerung und die Sicherheitssensoren, umfassen.

Die Aktualisierungseinheit umfasst einen zweiten Prozessor, einen zweiten flüchtigen Speicher und einen zweiten nicht-flüchtigen Speicher. Im zweiten nicht-flüchtigen Speicher der Aktualisierungseinheit kann beispielsweise eine Aktualisierungssoftware abgelegt sein, die ein Betriebssystem, Softwarekomponenten zum Entschlüsseln und Verschlüsseln, zum Kommunizieren über die interne und externe Schnittstelle etc. umfasst. Weiter kann die Aktualisierungseinheit Ports (Kommunikationsbausteine) für eine Datenkommunikation über die interne Schnittstelle und die externe Schnittstelle umfassen.

Gemäss einer Ausführungsform der Erfindung sind die Sicherheitseinheit und die Aktualisierungseinheit in einem gemeinsamen Gehäuse untergebracht. Die Sicherheitseinheit und die Aktualisierungseinheit können eine gemeinsame Baugruppe sein. Es ist möglich, dass beide Einheiten auf der gleichen Platine untergebracht sind. Somit ist es nur schwer möglich, eine Leitung zwischen der Sicherheitseinheit und der Aktualisierungseinheit anzuzapfen. Es ist aber auch möglich, dass beide Einheiten auf getrennten Platinen untergebracht sind, die in einem gemeinsamen Gehäuse angeordnet sind.

Gemäss einer Ausführungsform der Erfindung umfasst das Sicherheitssystem mehrere (beispielsweise redundante) Sicherheitseinheiten. Es ist auch möglich, dass das Sicherheitssystem aus mehreren, verteilt angeordneten Sicherheitseinheiten besteht, die jeweils unterschiedliche Aufgaben erledigen. Die Aktualisierungseinheit kann dazu ausgeführt sein, alle diese Sicherheitseinheiten mit aktualisierter Software zu versorgen. Es ist auch möglich, dass eine Sicherheitseinheit redundante Speicher-Bausteine umfasst, die von der Aktualisierungseinheit aktualisiert werden.

Gemäss einer Ausführungsform der Erfindung ist in der Aktualisierungseinheit eine Aktualisierungssoftware zum Empfangen der aktualisierten Software und zum Senden der aktualisierten Software an die Sicherheitseinheit gespeichert. Die Aktualisierungssoftware kann verschlüsselt im zweiten nicht-flüchtigen Speicher gespeichert sein. Die Aktualisierungssoftware kann auch in einem geschützten nicht-flüchtigen Speicher in verschlüsselter Form gespeichert sein. Vor dem Ausführen kann die Aktualisierungssoftware durch die Aktualisierungseinheit entschlüsselt werden.

Gemäss einer Ausführungsform der Erfindung umfasst die Aktualisierungseinheit einen geschützten nicht-flüchtigen Speicher, der über die externe Schnittstelle nicht änderbar ist. In diesem nicht-flüchtigen Speicher, beispielsweise ein geschützter FLASH-Speicher, können Daten abgelegt sein, die davor geschützt sind, über einen unberechtigten Zugriff über die externe Schnittstelle verändert zu werden.

Gemäss einer Ausführungsform der Erfindung ist ein Bootloader der Aktualisierungseinheit dazu ausgeführt, die Aktualisierungssoftware zu entschlüsseln und in den zweiten flüchtigen Speicher der Aktualisierungseinheit zu laden. Der Bootloader kann im geschützten nicht-flüchtigen Speicher abgelegt sein. Die Aktualisierungseinheit kann einen sicheren Bootvorgang dadurch ausführen, dass der von aussen nicht veränderbare Bootloader eine Aktualisierungssoftware, beispielsweise aus einem von aussen veränderbaren nicht-flüchtigen Speicher, lädt, entschlüsselt und im flüchtigen Speicher startet.

Gemäss einer Ausführungsform der Erfindung ist ein privater Schlüssel für das Sicherheitssystem im geschützten nicht-flüchtigen Speicher abgelegt. Mit diesem Schlüssel können Daten, die über die externe Schnittstelle empfangen werden, entschlüsselt werden. Auch eine verschlüsselt in der Aktualisierungseinheit abgelegte Aktualisierungssoftware kann mit dem privaten Schlüssel entschlüsselt werden. Der private Schlüssel kann eindeutig der Aktualisierungseinheit zugeordnet sein.

Gemäss einer Ausführungsform der Erfindung ist ein öffentlicher Schlüssel eines Bereitstellers der aktualisierten Software im geschützten nicht-flüchtigen Speicher abgelegt. Mit diesem öffentlichen Schlüssel kann der Bereitsteller authentifiziert und/oder Daten für ihn verschlüsselt werden.

Gemäss einer Ausführungsform der Erfindung ist die aktualisierte Software in unverschlüsselter Form im ersten nicht-flüchtigen Speicher der Sicherheitseinheit gespeichert. Da die Sicherheitseinheit durch die Aktualisierungseinheit vor unbefugten Zugriffen von aussen geschützt ist, kann darauf verzichtet werden, interne Datensicherheitsmassnahmen für die Sicherheitseinheit umzusetzen.

Ein weiterer Aspekt der Erfindung betrifft ein Verfahren zum Aktualisieren von Software eines Sicherheitssystems, so wie es obenstehend und untenstehend beschrieben ist. Beispielweise kann das Verfahren von einem Prozessor der Aktualisierungseinheit und optional von einem Prozessor der Sicherheitseinheit ausgeführt werden. Es ist zu verstehen, dass Merkmale des Verfahrens auch Merkmale des Sicherheitssystems sein können und umgekehrt.

Gemäss einer Ausführungsform der Erfindung umfasst das Verfahren: Authentisieren eines Bereitstellers der aktualisierten Software über die externe Schnittstelle; Empfangen eines Datenpakets mit der aktualisierten Software über die externe Schnittstelle durch die Aktualisierungseinheit; Übertragen der aktualisierten Software über die interne Schnittstelle an die Sicherheitseinheit; und Speichern der aktualisierten Software in einem nicht-flüchtigen Speicher der Sicherheitseinheit.

Die Authentisierung kann mit einem öffentlichen Schlüssel des Bereitstellers erfolgen, der in der Aktualisierungseinheit gespeichert ist.

Das Datenpaket mit der aktualisierten Software kann einen Header umfassen, der lediglich mit einem privaten, individuellen Schlüssel der Sicherheitseinheit entschlüsselt werden kann. Dieser Header kann Informationen über den Inhalt eines weiteren Teils des Datenpakets enthalten, das beispielsweise erst nach Empfangen des Headers vom Bereitsteller versendet werden kann.

Beispielsweise kann das Datenpaket nur geänderte Bestandteile der zu aktualisierenden Software umfassen und der Header kann darüber Auskunft geben, welche Teile der zu aktualisierenden Software mit der aktualisierten Software ersetzt werden sollen.

Das Speichern der aktualisierten Software kann beispielsweise direkt durch die Aktualisierungseinheit erfolgen. Es ist aber auch möglich, dass die Sicherheitseinheit eine eigene Aktualisierungssoftware als Softwarekomponente aufweist, die das Speichern der aktualisierten Software übernimmt.

Gemäss einer Ausführungsform der Erfindung umfasst das Verfahren weiter: Entschlüsseln des Datenpakets durch die Aktualisierungseinheit. Auch das Datenpaket kann mit dem privaten Schlüssel entschlüsselt werden. Es ist aber auch möglich, dass zumindest ein Teil des Datenpakets mit der aktualisierten Software andersartig verschlüsselt ist.

Gemäss einer Ausführungsform der Erfindung ist das Datenpaket oder zumindest ein Teil des Datenpakets mit der aktualisierten Software mit einem symmetrischen Verschlüsselungsverfahren, wie etwa im AES (Advanced Encryption Standard) definiert, verschlüsselt. Der temporäre Schlüssel für das symmetrische Verschlüsselungsverfahren kann mit Schlüsseln eines asymmetrischen Verschlüsselungsverfahrens, wie etwa dem oben genannten öffentlichen und privaten Schlüssel, ausgetauscht werden.

Gemäss einer Ausführungsform der Erfindung umfasst das Verfahren weiter: Regelmässiges Anfragen nach aktualisierter Software durch die Aktualisierungseinheit bei dem Bereitsteller. Die Aktualisierungssoftware kann die Aufgabe übernehmen, zu überprüfen, wann aktualisierte Software vorliegt. Dazu kann beispielsweise eine in der Aktualisierungseinheit gespeicherte Adresse abgefragt werden.

Gemäss einer Ausführungsform der Erfindung umfasst das Verfahren weiter: Anfrage für eine Übertragung der aktualisierten Software von der Aktualisierungseinheit an die Sicherheitseinheit; und Verhindern einer Übertragung durch die Sicherheitseinheit, wenn diese in einem Normalmodus ist. In einem Normalmodus bzw. Überwachungsmodus, in dem die Sicherheitseinheit die Sicherheit der gebäudegebundenen Personentransportanlage überwacht, kann die Sicherheitseinheit jegliche Kommunikation über die interne Schnittstelle unterbinden.

Gemäss einer Ausführungsform der Erfindung wird die aktualisierte Software nur dann übertragen, wenn sich die Sicherheitseinheit in einem Aktualisierungsmodus befindet. Eine Aktualisierung der Software muss beispielsweise von der Aktualisierungseinheit angefordert werden. Erst wenn sich die Sicherheitseinheit in einem Aktualisierungsmodus befindet, beispielsweise, wenn alle Aktuatoren der gebäudegebundenen Personentransportanlage deaktiviert sind, kann die Aktualisierung der Software erfolgen. Während der Aktualisierung kann die Sicherheitseinheit ein Warnsignal abgeben, das verhindert, dass Aktuatoren der gebäudegebundenen Personentransportanlage aktiviert werden.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt schematisch eine gebäudegebundene Personenbeförderungsanlage in der Form einer Aufzuganlage mit einem Sicherheitssystem gemäss einer Ausführungsform der Erfindung.
Fig. 2 zeigt ein Sicherheitssystem gemäss einer Ausführungsform der Erfindung.
Fig. 3 zeigt ein Sicherheitssystem gemäss einer weiteren Ausführungsform der Erfindung.
Fig. 4 zeigt ein Flussdiagramm für ein Verfahren zum Aktualisieren von Software eines Sicherheitssystems gemäss einer Ausführungsform der Erfindung.

Die Figuren sind lediglich schematisch und nicht massstabsgetreu. Gleiche Bezugszeichen bezeichnen in den verschiedenen Figuren gleiche oder gleichwirkende Merkmale.

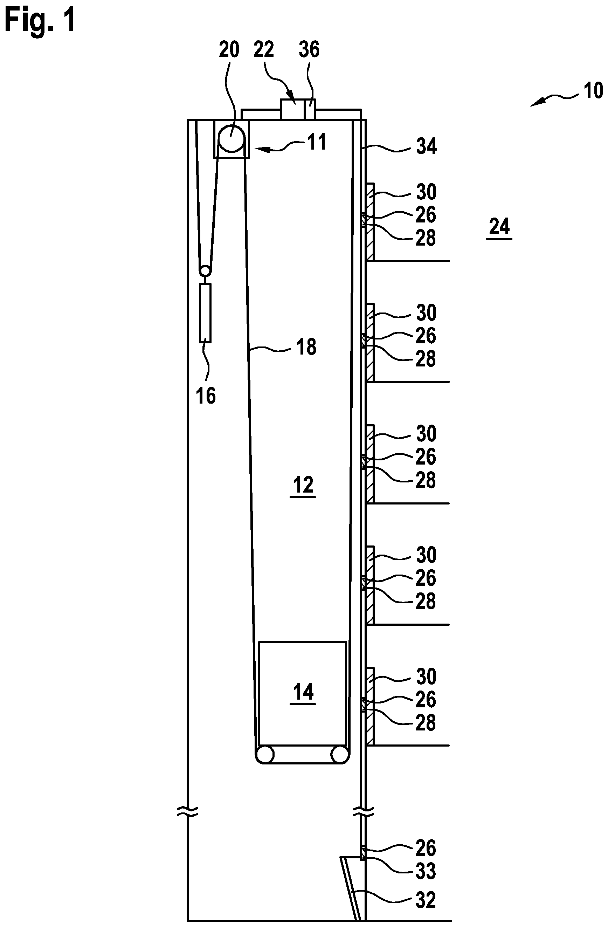

Fig. 1 zeigt eine gebäudegebundene Personenbeförderungsanlage 10 in der Form einer Aufzuganlage 10. Im Folgenden wird beispielhaft eine Aufzuganlage beschrieben. Es ist aber zu verstehen, dass auch andere Personenbeförderungsanlagen 10, wie etwa Fahrtreppen oder Fahrsteige, ein Sicherheitssystem aufweisen können, so wie es im Folgenden beschrieben wird.

Die Aufzuganlage 10 umfasst einen Aufzugschacht 12, in dem eine Aufzugskabine 14 und ein Gegengewicht 16 verfahren werden können. Die Aufzugskabine 14 und das Gegengewicht 16 sind hierzu an einem seil- oder riemenartigen Tragmittel 18 gehalten, welches von einer Antriebsmaschine 20 verlagert werden kann. Der Betrieb der Aufzuganlage 10 und insbesondere die Antriebsmaschine 20 kann mithilfe einer zentralen Steuereinheit 22 gesteuert werden.

Um eine korrekte Funktion und insbesondere eine Sicherheit der Aufzuganlage 10 gewährleisten zu können, sind in einem die Aufzuganlage 10 aufnehmenden Bauwerk 24 mehrere Sicherheitssensoren 26 aufgenommen. Die Sicherheitssensoren 26 sind dabei über das Bauwerk 24 hin verteilt angeordnet. Die Sicherheitssensoren 26 können beispielsweise einen Türschalter 28 umfassen bzw. mit einem Türschalter 28 verbunden sein, welche einen Schliesszustand von Türen 30, insbesondere von Stockwerktüren, der Aufzuganlage 10 überwachen können. Beispielsweise nahe einem Boden oder einer Grube des Aufzugschachts 12 kann ferner eine Leiter 32 gelagert sein, deren korrekt aufgeräumte Positionierung an einer Seitenwand des Aufzugschachts 12 beispielsweise mithilfe eines mit einem Sicherheitssensor 26 verbundenen Schalters 33 überwacht wird.

Die Sicherheitssensoren 26 können beispielsweise über einen seriellen Bus 34 mit einem Sicherheitssystem 36 verbunden sein, das basierend auf den Signalen der Sicherheitssensoren 26 ein Warnsignal erzeugt, wenn die Signale darauf hindeuten, dass ein Sicherheitsproblem vorliegt. Wenn die Steuerung 22 ein Warnsignal empfängt, kann sie beispielsweise den Betrieb der Aufzuganlage 10 einstellen bzw. verhindern, dass diese den Betrieb aufnimmt.

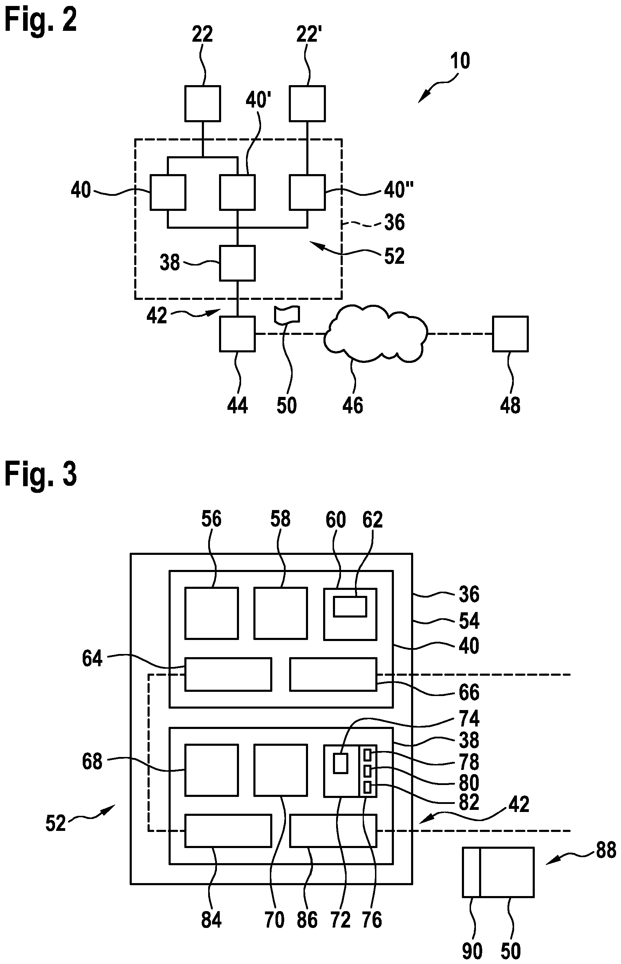

Die Fig. 2 zeigt ein Sicherheitssystem 36, das eine Aktualisierungseinheit 38 und eine oder mehrere Sicherheitseinheiten 40, 40', 40" umfasst. Die Aktualisierungseinheit 38 kann über eine externe Schnittstelle 42 mit einer Datenkommunikationseinheit 44 Daten austauschen, die beispielsweise über Internet 46 von einem Bereitsteller 48, beispielsweise einem Internet-Server, bereitgestellt werden. Insbesondere kann der Bereitsteller eine aktualisierte Software 50 für die Sicherheitseinheiten 40, 40', 40" bereitstellen, die dann von der Aktualisierungseinheit 38 über die externe Schnittstelle 42 heruntergeladen und eventuell entschlüsselt wird. Über eine interne Schnittstelle 52 wird die aktualisierte Software 50 dann in die eine oder mehrere Sicherheitseinheiten 40, 40', 40" eingespielt.

Die Datenkommunikationseinheit 44 kann beispielsweise ein Router oder eine Mobilfunkeinheit sein, die über ein LAN (local area network) mit der Aktualisierungseinheit 38 verbunden ist. Beispielsweise kann die externe Schnittstelle mittels Ethernet betrieben werden.

Die Aktualisierungseinheit 38 kann ein "embedded device" (eingebettetes Gerät) sein, d.h. ein Rechner, der für die externe Schnittstelle 42 und die interne Schnittstelle 52 entsprechende Eingabe/Ausgabe-Komponenten bereitstellt.

Auch die eine oder mehrere Sicherheitseinheiten 40, 40', 40" können embedded devices sein, die eine entsprechende Eingabe/Ausgabe-Komponente für die interne Schnittstelle 52, für die Sicherheitssensoren 26 und die zentrale Steuerung 22 bereitstellen. Eine Möglichkeit ist, dass die eine oder mehreren Sicherheitseinheiten 40, 40', 40" eine speicherprogrammierbare Steuerung (SPS) umfassen.

Es ist möglich, dass redundante Sicherheitseinheiten 40, 40' vorhanden sind, die das Warnsignal für die zentrale Steuerung 22 erzeugen. Beispielsweise können sich redundante Sicherheitseinheiten 40, 40' gegenseitig auf Funktionsstörungen überwachen. Redundante Sicherheitseinheiten 40, 40' können in einem embedded device und/oder eine speicherprogrammierbare Steuerung (SPS) implementiert sein. Weiter ist möglich, dass eine weitere Sicherheitseinheit 40" ein weiteres Warnsignal für eine weitere Steuerung 22' der Anlage 10 erzeugt. Beispielsweise könnte eine Aufzuganlage mit mehreren Antrieben 20 mehrere Steuerungen 22, 22' aufweisen, die alle gestoppt werden sollten, wenn ein Sicherheitssensor 26 Probleme meldet.

Die eine oder mehreren Sicherheitseinheiten 40, 40', 40" sind beispielsweise über einen seriellen Bus als interne Schnittstelle 52 mit der Aktualisierungseinheit 38 verbunden. Durch die Trennung des Sicherheitssystems in die Einheiten 38, 40, 40', 40", die jeweils einen eigenen Rechner umfassen, kann die externe Kommunikation und eine interne Software-Aktualisierung über die interne Schnittstelle 52 voneinander getrennt werden. Die Aktualisierungseinheit 38 kann so implementiert und optimiert werden, dass die Datensicherheit möglichst gross wird. Die eine oder mehreren Sicherheitseinheiten 40, 40', 40" können so implementiert und optimiert werden, dass die Personensicherheit möglichst gross und der Aufbau möglichst einfach wird.

Die Fig. 3 zeigt ein Sicherheitssystem 36, bei dem die Aktualisierungseinheit 38 und die Sicherheitseinheit 40 als gemeinsame Komponente in einem gemeinsamen Gehäuse 54 bereitgestellt sind. Beispielsweise können die Aktualisierungseinheit 38 und die Sicherheitseinheit 40 auf einer gemeinsamen Platine untergebracht sein.

Die Sicherheitseinheit 40, beispielsweise eine speicherprogrammierbare Steuerung (SPS), umfasst einen ersten Prozessor 56, einen ersten flüchtigen Speicher 58, beispielsweise RAM, und einen ersten nicht-flüchtigen Speicher 60, beispielsweise einen FLASH-Speicher. In dem nicht-flüchtigen Speicher befindet sich die zu aktualisierende Software bzw. Firmware 62, die die Signale von den Sicherheitssensoren 26 auswertet und das Warnsignal erzeugt. Die Software 62 kann auch Software-Komponenten enthalten, die für eine Aktualisierung der Software 62 zuständig sind.

Weiter umfasst die Sicherheitseinheit 40 eine Ein-/Ausgabe-Komponente 64 zur Kommunikation mit der Aktualisierungseinheit 38. Der Bus bzw. die Datenkommunikationsleitung zwischen der Sicherheitseinheit 40 und der Aktualisierungseinheit 38 kann vollständig in dem Gehäuse 54 enthalten sein. Auf diese Weise kann auch hier keine Manipulation von aussen erfolgen.

Die Sicherheitseinheit 40 umfasst weiter eine Ein-/Ausgabe-Komponente 66 zur Kommunikation mit der Steuerung 22 und/oder den Sicherheitssensoren 26. Die Ein-/Ausgabe-Komponente 66 kann so eingerichtet sein, dass eine Aktualisierung der Software 62 über sie nicht möglich ist. Beispielsweise könnte die Ein-/Ausgabe-Komponente 66 rein analog sein.

Die Aktualisierungseinheit 38, beispielsweise ein embedded device, umfasst einen zweiten Prozessor 68, einen zweiten flüchtigen Speicher 70, beispielsweise RAM, und einen zweiten nicht-flüchtigen Speicher 72, beispielsweise einen FLASH-Speicher. In dem nicht-flüchtigen Speicher befindet sich Software bzw. Firmware 74, die für die Kommunikation mit dem Bereitsteller 48 sowie das Empfangen, Entschlüsseln und Senden der zu aktualisierenden Software 50 zuständig ist.

Weiter kann die Aktualisierungseinheit 38 einen geschützten nicht-flüchtigen Speicher 76 umfassen, der vor Aktualisierungen über die externe Schnittstelle 42 geschützt ist. Beispielsweise kann der geschützte nicht-flüchtige Speicher 76 ein FLASH-Speicher oder EPROM sein, der nur mit einem mechanischen Eingriff im Sicherheitssystem 36 (wie etwa Öffnen des Gehäuses 54) verändert werden kann.

In dem geschützten nicht-flüchtigen Speicher 76 kann sich ein Bootloader 78 befinden, der die Software 74, die lediglich verschlüsselt im Speicher 72 abgelegt sein kann, entschlüsselt und in den flüchtigen Speicher 70 lädt. Auch die Software 74 kann sich zumindest zum Teil im geschützten nicht-flüchtigen Speicher 76 befinden.

In dem geschützten nicht-flüchtigen Speicher 76 kann sich weiter ein privater Schlüssel 80 für die Aktualisierungseinheit 38 befinden, mit dem beispielsweise die Software 74 entschlüsselt werden kann.

Ausserdem kann sich in dem geschützten nicht-flüchtigen Speicher 76 ein öffentlicher Schlüssel 82 des Bereitstellers 48 von aktualisierter Software 50 befinden, mit dem beispielsweise der Bereitsteller 48 authentisiert werden kann, wenn eine Datenkommunikation mit ihm aufgebaut wird.

Weiter umfasst die Aktualisierungseinheit 38 eine Ein-/Ausgabe-Komponente 84 zur Kommunikation mit der Sicherheitseinheit 40 und eine Ein-/Ausgabe-Komponente 86 zur Kommunikation mit der Datenkommunikationseinheit 44, beispielsweise mittels Ethernet.

Es ist zu verstehen, dass die in der Fig. 2 gezeigten Sicherheitseinheiten 40, 40', 40" so wie die in der Fig. 3 gezeigte Sicherheitseinheit 40 aufgebaut sein können. Gleiches gilt für die Aktualisierungseinheit 38 sowie für das Sicherheitssystem 36.

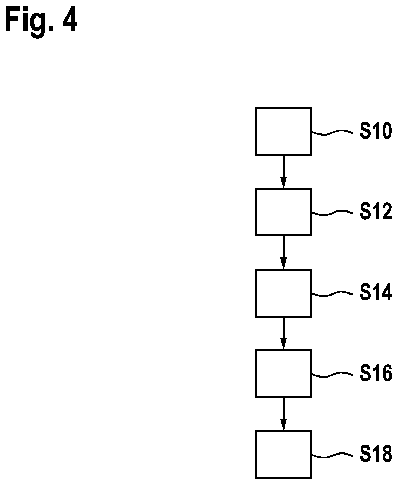

Die Fig. 4 zeigt ein Flussdiagramm für ein Verfahren zum Aktualisieren von Software eines Sicherheitssystems 36, so wie es beispielweise in den vorhergehenden Figuren gezeigt ist.

In Schritt S10 fragt die Aktualisierungseinheit 38 bei dem Bereitsteller 48 über die externe Schnittstelle 42 regelmässig ab, ob aktualisierte Software 50 vorhanden ist. Beispielsweise kann dies einmal am Tag geschehen. Dabei kann auch der Bereitsteller 48 der aktualisierten Software 50 authentisiert werden, d.h., es kann überprüft werden, ob der Bereitsteller 48 wirklich der ist, von dem aktualisierte Software 50 angefordert werden soll. Die Authentisierung kann beispielsweise mit dem öffentlichen Schlüssel 82 erfolgen.

Beispielsweise kann der Bereitsteller 48 ein Server sein, der von einem Hersteller und/oder Wartungsverantwortlichen für die Anlage 10 für Software-Aktualisierungen bereitgestellt wird.

Liegt aktualisierte Software 50 vor, wird im Schritt S12 ein Datenpaket 88 mit der aktualisierten Software 50 von der Aktualisierungseinheit 38 über die externe Schnittstelle 42 empfangen. Beispielsweise kann zunächst ein Header 90 des Datenpakets 88 empfangen werden, in dem Informationen über den Umfang der aktualisierten Software 50 abgelegt sind. Es ist möglich, dass nicht die gesamte zu aktualisierende Software 62, sondern lediglich Teile davon aktualisiert werden sollen. Dies kann in dem Header 90 gespeichert sein.

Es ist weiter möglich, dass das Datenpaket 88 bzw. dessen Body und/oder die aktualisierte Software 50 mit einem symmetrischen Verschlüsselungsverfahren verschlüsselt sind. Der zugehörige temporäre Schlüssel kann dazu mittels der beiden Schlüssel 80, 82 ermittelt werden.

Ist das Datenpaket 88 bzw. die aktualisierte Software 50 verschlüsselt, nimmt die Aktualisierungseinheit 38 im Schritt S14 die Entschlüsselung vor. Die aktualisierte Software 50 befindet sich nun in entschlüsselter Form im flüchtigen Speicher 70 der Aktualisierungseinheit 38.

Für die interne Schnittstelle 52 kann ein Aktualisierungsprotokoll zwischen der Aktualisierungseinheit 38 und der Sicherheitseinheit 40 vorhanden sein, das unter anderem sicherstellt, dass die aktualisierte Software 50 nur dann übertragen wird, wenn sich die Sicherheitseinheit 40 in einem Aktualisierungsmodus befindet.

Dazu kann die Aktualisierungseinheit 38 im Schritt S16 bei der Sicherheitseinheit 40 über die interne Schnittstelle 52 anfragen, ob die Sicherheitseinheit 40 für eine Übertragung der aktualisierten Software 50 bereit ist. Ist dies nicht der Fall, weil sich die Sicherheitseinheit beispielsweise in einem Normalmodus befindet, kann diese eine Übertragung verhindern.

Weiter kann die Sicherheitseinheit 40 nach dieser Anfrage aktiv in den Aktualisierungsmodus übergehen oder darauf warten, dass sich eine Gelegenheit bietet, in den Aktualisierungsmodus überzugehen, beispielsweise, wenn die Anlage 10 deaktiviert wird. Befindet sich die Sicherheitseinheit 40 im Aktualisierungsmodus, kann sie die Aktualisierungseinheit 38 entsprechend über die interne Schnittstelle 52 informieren.

Im Schritt S18, wenn sich die Sicherheitseinheit 40 im Aktualisierungsmodus befindet, wird die aktualisierte Software 50 über die interne Schnittstelle 52 an die Sicherheitseinheit 40 übertragen. Die aktualisierte Software 50 kann in dem nicht-flüchtigen Speicher 60 der Sicherheitseinheit 40 in unverschlüsselter Form gespeichert werden.

Abschliessend ist darauf hinzuweisen, dass Begriffe wie "aufweisend", "umfassend" etc. keine anderen Elemente oder Schritte ausschliessen und Begriffe wie "eine" oder "ein" keine Vielzahl ausschliessen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Sicherheitssystem (36) für eine gebäudegebundene Personentransportanlage (10), das Sicherheitssystem (36) umfassend:
eine Sicherheitseinheit (40) zum Empfangen von sicherheitsrelevanten Signalen von Komponenten (26) der Personentransportanlage (10) und zum Auslösen einer Sicherheitsmassnahme;
eine Aktualisierungseinheit (38) zum Empfangen von aktualisierter Software (50) über eine externe Schnittstelle (42) und zum Senden der aktualisierten Software (50) an die Sicherheitseinheit (40) über eine interne Schnittstelle (52)
**dadurch gekennzeichnet, dass**
die Sicherheitseinheit (40) einen ersten Prozessor (56), einen ersten flüchtigen Speicher (58) und einen ersten nicht-flüchtigen Speicher (60) umfasst und
die Aktualisierungseinheit (38) einen zweiten Prozessor (68), einen zweiten flüchtigen Speicher (70) und einen zweiten nicht-flüchtigen Speicher (72) umfasst.

2. Sicherheitssystem (36) nach Anspruch 1,
wobei die Sicherheitseinheit (40) und die Aktualisierungseinheit (38) in einem gemeinsamen Gehäuse (54) untergebracht sind.

3. Sicherheitssystem (36) nach einem der vorhergehenden Ansprüche,
wobei das Sicherheitssystem (36) mehrere Sicherheitseinheiten (40, 40', 40") umfasst;
wobei die Aktualisierungseinheit (38) dazu ausgeführt ist, die Sicherheitseinheiten (40, 40', 40") mit aktualisierter Software (50) zu versorgen.

4. Sicherheitssystem (36) nach einem der vorhergehenden Ansprüche,
wobei in der Aktualisierungseinheit (38) eine Aktualisierungssoftware (74) zum Empfangen der aktualisierten Software (50) und zum Senden der aktualisierten Software (50) an die Sicherheitseinheit (40) gespeichert ist;
wobei die Aktualisierungssoftware (74) verschlüsselt im zweiten nicht-flüchtigen Speicher (72) gespeichert ist.

5. Sicherheitssystem (36) nach einem der vorhergehenden Ansprüche,
wobei die Aktualisierungseinheit (38) einen geschützten nicht-flüchtigen Speicher (76) umfasst, der über die externe Schnittstelle (42) nicht änderbar ist.

6. Sicherheitssystem (36) nach Anspruch 5,
wobei ein Bootloader (78) der Aktualisierungseinheit (38) dazu ausgeführt ist, eine Aktualisierungssoftware (74) zu entschlüsseln und in den zweiten flüchtigen Speicher (70) der Aktualisierungseinheit (38) zu laden.

7. Sicherheitssystem (36) nach Anspruch 5 oder 6,
wobei ein privater Schlüssel (80) für das Sicherheitssystem (36) im geschützten nicht-flüchtigen Speicher (76) abgelegt ist; und/oder
wobei ein öffentlicher Schlüssel (82) eines Bereitstellers (48) der aktualisierten Software (50) im geschützten nicht-flüchtigen Speicher (76) abgelegt ist.

8. Sicherheitssystem (36) nach einem der vorhergehenden Ansprüche,
wobei die aktualisierte Software (50) in unverschlüsselter Form im ersten nicht-flüchtigen Speicher (60) der Sicherheitseinheit (40) gespeichert wird.

9. Verfahren zum Aktualisieren von Software eines Sicherheitssystems (36) nach einem der vorhergehenden Ansprüche, das Verfahren umfassend:
Authentisieren eines Bereitstellers (48) der aktualisierten Software (50) über die externe Schnittstelle (42);
Empfangen eines Datenpakets (88) mit der aktualisierten Software (50) über die externe Schnittstelle (42) durch die Aktualisierungseinheit (38); welche einen zweiten Prozessor (68), einen zweiten flüchtigen Speicher (70) und einen zweiten nicht-flüchtigen Speicher (72) aufweist,
Übertragen der aktualisierten Software (50) über die interne Schnittstelle (52) an die Sicherheitseinheit (40), welche einen ersten Prozessor (56), einen ersten flüchtigen Speicher (58) und einen ersten nicht-flüchtigen Speicher (60) aufweist;
Speichern der aktualisierten Software (50) in einem nicht-flüchtigen Speicher (60) der Sicherheitseinheit (40).

10. Verfahren nach Anspruch 9, weiter umfassend:
Entschlüsseln des Datenpakets (88) durch die Aktualisierungseinheit (38).

11. Verfahren nach Anspruch 10,
wobei das Datenpaket (88) zumindest teilweise mit einem symmetrischen Verschlüsselungsverfahren verschlüsselt ist.

12. Verfahren nach einem der Ansprüche 9 bis 11, weiter umfassend:
Regelmässiges Anfragen nach aktualisierter Software (50) durch die Aktualisierungseinheit (38) bei dem Bereitsteller (48).

13. Verfahren nach einem der Ansprüche 9 bis 12, weiter umfassend:
Anfrage für eine Übertragung der aktualisierten Software (50) von der Aktualisierungseinheit (38) an die Sicherheitseinheit (40);
Verhindern einer Übertragung durch die Sicherheitseinheit (40), wenn diese in einem Normalmodus ist.

14. Verfahren nach einem der Ansprüche 9 bis 13,
wobei die aktualisierte Software (50) nur dann übertragen wird, wenn sich die Sicherheitseinheit (40) in einem Aktualisierungsmodus befindet.

## Claims

1. Safety system (36) for a building-based passenger transport system (10), the safety system (36) comprising:
a safety unit (40) for receiving safety-relevant signals from components (26) of the passenger transport system (10), and for triggering a safety measure;
an updating unit (38) for receiving updated software (50) via an external interface (42), and for transmitting the updated software (50) to the safety unit (40) via an internal interface (52),
**characterized in that**
the safety unit (40) comprises a first processor (56), a first volatile memory (58) and a first non-volatile memory (60), and
the updating unit (38) comprises a second processor (68), a second volatile memory (70) and a second non-volatile memory (72).

2. Safety system (36) according to claim 1,
wherein the safety unit (40) and the updating unit (38) are accommodated in a common housing (54).

3. Safety system (36) according to any of the previous claims,
wherein the safety system (36) comprises a plurality of safety units (40, 40', 40");
wherein the updating unit (38) is designed to provide the safety units (40, 40', 40") with updated software (50).

4. Safety system (36) according to any of the previous claims,
wherein updating software (74) for receiving the updated software (50) and transmitting the updated software (50) to the safety unit (40) is stored in the updating unit (38);
wherein the updating software (74) is stored in encrypted form in the second non-volatile memory (72).

5. Safety system (36) according to any of the previous claims,
wherein the updating unit (38) comprises a protected non-volatile memory (76) which cannot be changed via the external interface (42).

6. Safety system (36) according to claim 5,
wherein a bootloader (78) of the updating unit (38) is designed to decrypt updating software (74) and load said software into the second volatile memory (70) of the updating unit (38).

7. Safety system (36) according to either claim 5 or claim 6,
wherein a private key (80) for the safety system (36) is stored in the protected non-volatile memory (76); and/or
wherein a public key (82) of a provider (48) of the updated software (50) is stored in the protected non-volatile memory (76).

8. Safety system (36) according to any of the previous claims,
wherein the updated software (50) is stored in unencrypted form in the first non-volatile memory (60) of the safety unit (40).

9. Method for updating software of a safety system (36) according to any of the preceding claims, the method comprising:
authenticating a provider (48) of the updated software (50) via the external interface (42);
receiving a data packet (88) which has the updated software (50) via the external interface (42) by means of the updating unit (38) which has a second processor (68), a second volatile memory (70) and a second non-volatile memory (72),
transferring the updated software (50) to the safety unit (40) via the internal interface (52), which unit has a first processor (56), a first volatile memory (58) and a first non-volatile memory (60);
storing the updated software (50) in a non-volatile memory (60) of the safety unit (40).

10. Method according to claim 9, further comprising:
decrypting the data packet (88) by means of the updating unit (38).

11. Method according to claim 10,
wherein the data packet (88) is at least partially encrypted using a symmetric encryption method.

12. Method according to any of claims 9 to 11, further comprising:
the updating unit (38) regularly requesting updated software (50) from the provider (48).

13. Method according to any of claims 9 to 12, further comprising:
a request for a transmission of the updated software (50) from the updating unit (38) to the safety unit (40);
preventing a transmission by the safety unit (40) when said unit is in a normal mode.

14. Method according to any of claims 9 to 13,
wherein the updated software (50) is transmitted only when the safety unit (40) is in an update mode.

## Revendications

1. Système de sécurité (36) pour un système de transport de passagers (10) lié à un bâtiment, le système de sécurité (36) comprenant :
une unité de sécurité (40) permettant de recevoir des signaux relatifs à la sécurité provenant de composants (26) du système de transport de passagers (10) et permettant de déclencher une mesure de sécurité ;
une unité de mise à jour (38) permettant de recevoir un logiciel mis à jour (50) par l'intermédiaire d'une interface externe (42) et permettant d'envoyer le logiciel mis à jour (50) à l'unité de sécurité (40) par l'intermédiaire d'une interface interne (52),
**caractérisé en ce que**
l'unité de sécurité (40) comprend un premier processeur (56), une première mémoire volatile (58) et une première mémoire non volatile (60) et
l'unité de mise à jour (38) comprend un second processeur (68), une seconde mémoire volatile (70) et une seconde mémoire non volatile (72).

2. Système de sécurité (36) selon la revendication 1,
dans lequel l'unité de sécurité (40) et l'unité de mise à jour (38) sont logées dans un boîtier commun (54).

3. Système de sécurité (36) selon l'une des revendications précédentes,
dans lequel le système de sécurité (36) comprend plusieurs unités de sécurité (40, 40', 40") ;
dans lequel l'unité de mise à jour (38) est configurée pour fournir un logiciel mis à jour (50) aux unités de sécurité (40, 40', 40").

4. Système de sécurité (36) selon l'une des revendications précédentes,
dans lequel un logiciel de mise à jour (74) permettant de recevoir le logiciel mis à jour (50) et permettant d'envoyer le logiciel mis à jour (50) à l'unité de sécurité (40) est mémorisé dans l'unité de mise à jour (38) ;
le logiciel de mise à jour (74) étant mémorisé codé dans la seconde mémoire non volatile (72).

5. Système de sécurité (36) selon l'une des revendications précédentes,
dans lequel l'unité de mise à jour (38) comprend une mémoire non volatile protégée (76) qui ne peut pas être modifiée par l'intermédiaire de l'interface externe (42).

6. Système de sécurité (36) selon la revendication 5,
dans lequel un chargeur d'amorçage (78) de l'unité de mise à jour (38) est configuré pour décoder un logiciel de mise à jour (74) et le charger dans la seconde mémoire volatile (70) de l'unité de mise à jour (38).

7. Système de sécurité (36) selon la revendication 5 ou 6,
dans lequel une clé privée (80) pour le système de sécurité (36) est stockée dans la mémoire non volatile protégée (76) ; et/ou
une clé publique (82) d'un fournisseur (48) du logiciel mis à jour (50) est stockée dans la mémoire non volatile protégée (76).

8. Système de sécurité (36) selon l'une des revendications précédentes,
dans lequel le logiciel mis à jour (50) est mémorisé sous forme non codée dans la première mémoire non volatile (60) de l'unité de sécurité (40).

9. Procédé permettant la mise à jour d'un logiciel d'un système de sécurité (36) selon l'une des revendications précédentes, le procédé comprenant :
l'authentification d'un fournisseur (48) du logiciel mis à jour (50) par l'intermédiaire de l'interface externe (42) ;
la réception d'un paquet de données (88) avec le logiciel mis à jour (50) par l'unité de mise à jour (38) par l'intermédiaire de l'interface externe (42) ; laquelle unité de mise à jour présente un second processeur (68), une seconde mémoire volatile (70) et une seconde mémoire non volatile (72),
la transmission du logiciel mis à jour (50) à l'unité de sécurité (40) par l'intermédiaire de l'interface interne (52), laquelle unité de sécurité présente un premier processeur (56), une première mémoire volatile (58) et une première mémoire non volatile (60) ;
la mémorisation du logiciel mis à jour (50) dans une mémoire non volatile (60) de l'unité de sécurité (40).

10. Procédé selon la revendication 9, comprenant en outre :
le décodage du paquet de données (88) par l'unité de mise à jour (38).

11. Procédé selon la revendication 10,
dans lequel le paquet de données (88) est au moins partiellement codé avec un procédé de codage symétrique.

12. Procédé selon l'une des revendications 9 à 11, comprenant en outre : des demandes régulières de logiciels mis à jour (50) par
l'unité de mise à jour (38) auprès du fournisseur (48).

13. Procédé selon l'une des revendications 9 à 12, comprenant en outre : la demande pour une transmission du logiciel mis à jour (50) de
l'unité de mise à jour (38) vers l'unité de sécurité (40) ;
le fait d'empêcher une transmission par l'unité de sécurité (40) lorsque celle-ci est dans un mode normal.

14. Procédé selon l'une des revendications 9 à 13,
dans lequel le logiciel mis à jour (50) n'est transmis que lorsque l'unité de sécurité (40) se trouve dans un mode de mise à jour.
